(19) Europäisches Patentamt / European Patent Office / Office européen des brevets

(11) **EP 4 268 955 B1**

(12) **EUROPEAN PATENT SPECIFICATION**

(45) Date of publication and mention of the grant of the patent:
**12.11.2025 Bulletin 2025/46**

(21) Application number: **21909830.8**

(22) Date of filing: **15.09.2021**

(51) International Patent Classification (IPC):
**B01J 23/63** (2006.01)    **B01J 35/30** (2024.01)
**B01D 53/94** (2006.01)    **F01N 3/28** (2006.01)
**B01J 35/57** (2024.01)

(52) Cooperative Patent Classification (CPC):
**F01N 3/2814; B01D 53/944; B01J 23/63;**
**B01J 35/395; B01J 35/57;** B01D 2255/1023;
B01D 2255/2063; B01D 2255/407; B01D 2258/012;
F01N 2330/30; F01N 2510/06; Y02A 50/20

(86) International application number:
**PCT/JP2021/033874**

(87) International publication number:
**WO 2022/137672 (30.06.2022 Gazette 2022/26)**

(54) **HONEYCOMB-TYPE METAL SUBSTRATE, CATALYTIC CONVERTER, AND METHOD FOR MANUFACTURING HONEYCOMB-TYPE METAL SUBSTRATE**

WABENFÖRMIGER METALLTRÄGER, KATALYSATOR UND VERFAHREN ZUR HERSTELLUNG EINES WABENFÖRMIGEN METALLTRÄGERS

SUPPORT MÉTALLIQUE DU TYPE NID D'ABEILLES, POT CATALYTIQUE ET PROCÉDÉ DE FABRICATION DE SUPPORT MÉTALLIQUE DU TYPE NID D'ABEILLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.12.2020 JP 2020216017**

(43) Date of publication of application:
**01.11.2023 Bulletin 2023/44**

(73) Proprietor: **NIPPON STEEL Chemical & Material Co., Ltd.**
**Tokyo 103-0027 (JP)**

(72) Inventors:
• **INAGUMA, Toru**
  **Tokyo 103-0027 (JP)**
• **KONYA, Shogo**
  **Tokyo 103-0027 (JP)**
• **NOZAWA, Souhei**
  **Tokyo 103-0027 (JP)**
• **MURAMATSU, Kei**
  **Tokyo 103-0027 (JP)**
• **GOTO, Yasuhide**
  **Tokyo 103-0027 (JP)**

(74) Representative: **J A Kemp LLP**
**80 Turnmill Street**
**London EC1M 5QU (GB)**

(56) References cited:
WO-A1-2012/036195    WO-A1-2017/126174
JP-A- 2005 313 083    JP-A- 2009 178 647
JP-A- 2015 029 928    JP-A- 2017 148 705
JP-A- H09 245 938    JP-A- S63 258 647
US-A1- 2010 298 130

## Description

Technical Field

The present invention relates to a honeycomb-type metal substrate formed by alternately layering a metal flat foil and a metal corrugated foil.

Background Art

As a catalyst substrate for removing pollutants from exhaust gas of internal combustion engines of automobiles or the like, there is known a catalytic converter formed by inserting a honeycomb body made of a heat-resistant alloy into an outer mantle made of a heat-resistant alloy. Among catalytic converters, especially in a metal substrate made of a metal foil, a honeycomb body formed by alternately layering a metal flat foil having a thickness of about 50 $\mu$m and a corrugated foil obtained by corrugating the flat foil, or a honeycomb body formed by overlapping and spirally winding strip-shaped flat foil and corrugated foil or the like, have been used.

In recent years, automobile emission regulations have tended to become stricter, and emissions of harmful substances, such as carbon monoxide, hydrocarbons, and nitrogen oxides, especially during a cold start in an emission measurement mode, account for a significant proportion of total emissions; therefore, early activation of the catalyst is required. Hence, there have been proposed various metal substrates in which flat foils and corrugated foils included in metal substrates are subjected to hole-forming processing so as to generate turbulent flows, thereby enhancing the emission control performance.

Patent Literature 1 discloses a technique for improving the flow characteristics inside a honeycomb body and improving substance exchanges between a surface and the flow caused by this improvement by appropriately determining the number, the size, and the distribution of holes, thereby improving the emission control performance.

Patent Literature 2 discloses a catalytic converter excellent in high-temperature durability, mainly including a metal foil in which a plurality of holes are formed and having improved brazing positions. Patent Literature 3 discloses a technique in which in a metal catalyst substrate including a corrugated sheet and a flat sheet in which a plurality of slit holes are formed, annular projections that project from the corrugated sheet and the flat plate at an opening edge of each slit hole are formed, and exhaust gas is caused to collide with the annular projections to cause turbulence, to thereby enhance the emission control performance.

Patent Literature 4 discloses a technique regarding a catalyst substrate including a corrugated or uneven metal foil in which through-holes are formed in peaks or troughs of the metal foil, the catalyst substrate including yoke-shaped projections or burrs formed around the through-holes; and this technique efficiently catches diesel particles by the through-holes having the yoke-shaped projections or the burrs. Patent Literature 5 discloses a catalyst substrate including a metal foil having a corrugated structure with peaks and troughs periodically repeated, the corrugated structure having cutouts and projection pieces projecting from the cutouts, wherein a plurality of projection pieces project separately from each other from each cutout, and the metal foil of the catalyst substrate is configured such that the projecting pieces project toward the inside of the corrugated structure, thereby disturbing the flow of exhaust gas with the projection pieces, or the like.

US 2010/298130 A1 discloses a metal carrier catalyst for cleaning exhaust gas.

Citation List

Patent Literature

Patent Literature 1
Japanese Patent No. 4975969
Patent Literature 2
Japanese Patent No. 5199291
Patent Literature 3
Japanese Patent Laid-Open No. 2005-313083
Patent Literature 4
Japanese Patent Laid-Open No. 2015-157272
Patent Literature 5
Japanese Patent Laid-Open No. 2017-148705

Summary of Invention

Technical Problems

As described above, the projections extending from each opening edge have been conventionally used to induce turbulence and enhance the emission control performance. However, it has been pointed out that excessive generation of turbulence causes a pressure loss, resulting in decrease in output and deterioration in fuel efficiency of the internal combustion engine. For this reason, there is a demand for a technology that enhances the emission control performance while suppressing excessive generation of turbulence.

Solution To Problems

In order to solve the above problems, a honeycomb-type metal substrate according to the present invention is (A) a honeycomb-type metal substrate formed by alternately layering a metal flat foil and a metal corrugated foil, a plurality of holes being formed in the metal flat foil and the metal corrugated foil, a burr having a small height being formed on an edge of each hole, the following expressions (1) to (3) being satisfied when an average hole diameter of the plurality of holes is defined as D, an aperture ratio of the holes is defined as R, and an average height of the burrs is defined as L,

$$1.1\ mm \leq D \leq 4.0\ mm \qquad (1)$$

$$5\% \leq R \leq 70\% \qquad (2)$$

$$0.1\ \mu m \leq L \leq 30\ \mu m \qquad (3)$$

wherein:

for holes that are not circular, the hole diameter of each hole can be found by converting the area into a circle; and when a triangle is drawn by connecting the centers of three adjacent holes with lines and an area inside the triangle is defined as an entire area, and areas of parts where the triangle overlaps with the holes are defined as hole areas, a ratio of the hole areas to the entire area is defined as the aperture ratio R.

(B) The honeycomb-type metal substrate as set forth in the above (A), wherein a tip end surface of each burr is formed in a shape extending in a direction orthogonal to a projecting direction of the burr.

(C) The honeycomb-type metal substrate as set forth in the above (B), wherein the burrs have narrow portions each having a width smaller than the tip end surface.

(D) The honeycomb-type metal substrate as set forth in any one of the above (A) to (C), wherein the average height of the burrs L satisfies the following expression (4),

$$0.5\ \mu m \leq L \leq 20\ \mu m \qquad (4).$$

(E) The honeycomb-type metal substrate as set forth in any one of the above (A) to (D), wherein a standard deviation $\sigma$ of hole diameters of the plurality of holes is 0.001 mm or more and 0.5 mm or less.

(F) A catalytic converter including: the honeycomb-type metal substrate as set forth in any one of the above (A) to (C); and a catalyst layer carried on the metal flat foil and the metal corrugated foil, the average height of the burrs L being smaller than a thickness of the catalyst layer or larger than the thickness of the catalyst layer by a predetermined amount, and the predetermined amount being 10 $\mu$m or less.

(G) A catalytic converter as set forth in (F), wherein:

the average height of the burrs L satisfies the following expression (4),
0.5 $\mu$m $\leq$ L $\leq$ 20 $\mu$m (4), and the average height of the burrs L being smaller than a thickness of the catalyst layer.

(H) A method for manufacturing a honeycomb-type metal substrate formed by alternately layering a metal flat foil and a metal corrugated foil, the method including: a hole-forming step of forming a plurality of holes in each of the metal flat foil and a base-material metal flat foil as a base material of the metal corrugated foil; a height adjusting step of adjusting a burr height by crushing a burr formed at an edge of each hole in the hole-forming step; a pressing step of pressing the base-material metal flat foil to form the metal corrugated foil; and a layering step of layering the metal flat foil and the metal corrugated foil, the hole forming step being performed so as to satisfy the following expressions (1) and (2) when an average hole diameter of the plurality of holes is defined as D, and an aperture ratio of the holes is defined as R, the height adjusting step being performed so as to satisfy the following expression (3) when an average height of the burrs is defined as L,

$$1.1 \ \text{mm} \ \leq \ D \ \leq \ 4.0 \ \text{mm} \quad\quad (1)$$

$$5\% \ \leq \ R \ \leq \ 70\% \quad\quad (2)$$

$$0.1 \ \mu\text{m} \ \leq \ L \ \leq \ 30 \ \mu\text{m} \quad\quad (3)$$

wherein:

for holes that are not circular, the hole diameter of each hole can be found by converting the area into a circle; and when a triangle is drawn by connecting the centers of three adjacent holes with lines and an area inside the triangle is defined as an entire area, and areas of parts where the triangle overlaps with the holes are defined as hole areas, a ratio of the hole areas to the entire area is defined as the aperture ratio R.

(I) The method for manufacturing the honeycomb-type metal substrate as set forth in the above (H), wherein the height adjusting step is performed such that the average height of the burrs L satisfies the following expression (4),

$$0.5 \ \mu\text{m} \ \leq \ L \ \leq \ 20 \ \mu\text{m} \quad\quad (4).$$

(J) The method for manufacturing the honeycomb-type metal substrate as set forth in the above (H) or (I), wherein the hole forming step is performed such that a standard deviation σ of hole diameters of the plurality of holes satisfies 0.001 mm or more and 0.5 mm or less.

Advantageous Effects of Invention

According to the present invention, it is possible to provide a honeycomb-type metal substrate for a catalytic converter having excellent emission control performance and capable of suppressing excessive turbulence by forming burrs with small heights on an edge of each hole.

Brief Description of Drawings

[Figure 1] Figure 1 is a perspective view of a catalytic converter.
[Figure 2] Figure 2 is a cross-sectional view of a part of a honeycomb body.
[Figure 3] Figure 3 is a photograph of a cross section of a burr before the shape adjustment.
[Figure 4] Figure 4 is a photograph of the cross section of the burr after the shape adjustment.
[Figure 5] Figure 5 is a schematic view of a tip end surface of the burr extending around a hole.
[Figure 6] Figure 6 is a plan view of the catalytic converter for explaining a method of calculating an average height of the burrs L.
[Figure 7] Figure 7 is a schematic view of a shape adjustment device.
[Figure 8] Figure 8 is a view for explaining an aperture ratio R.
[Figure 9] Figure 9 is a photograph of a cross section of a burr (modification) after the shape adjustment.
[Figure 10] Figure 10 is a cross-sectional view of a part of a honeycomb body (the second embodiment).

Description of Embodiments

(First embodiment)

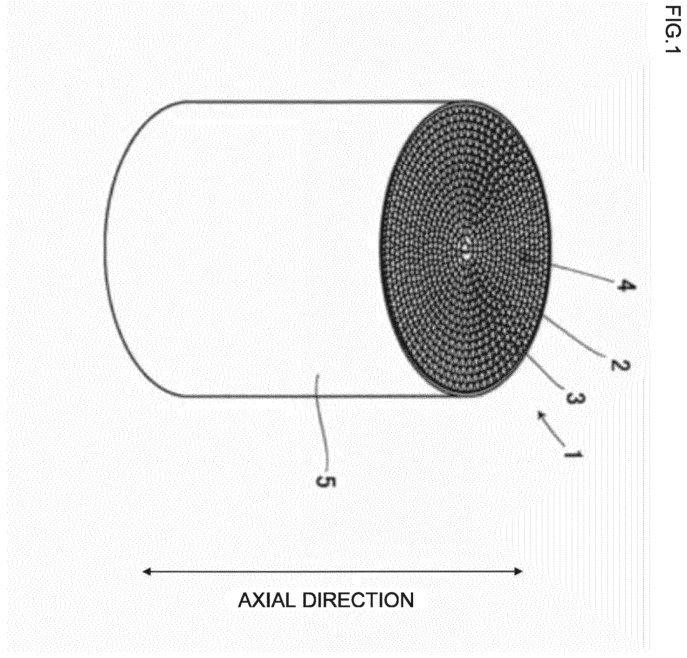

Preferred embodiments of the present invention will be described in detail with reference to the drawings. Figure 1 is a perspective view of a catalytic converter 1, and the axial direction of the catalytic converter 1 is indicated by a double arrow. The catalytic converter 1 includes: a honeycomb body (corresponding to a honeycomb-type metal substrate) 4 formed by spirally winding a flat foil 2 and a corrugated foil 3 into a wound body; and an outer mantle 5 surrounding the outer circumferential surface of the honeycomb body 4. Note that the honeycomb body 4 may also be a layered body formed by alternately layering the flat foil 2 and the corrugated foil 3. Either the wound body or the layered body has a structure in which the flat foil 2 and the corrugated foil 3 are layered when viewed in a cross section. Hence, the honeycomb-type metal substrate as set forth in the claims includes not only the layered body but also the wound body.

A metal foil made of a heat-resistant alloy may be used for the flat foil 2 and the corrugated foil 3. The thickness of the metal foil is preferably 20 $\mu$m or more and 100 $\mu$m or less. The width of the metal foil is preferably 10 mm or more and 500 mm or less. The size of the metal foil may be changed as appropriate depending on the application of the catalytic converter 1. The corrugated foil 3 may be manufactured by corrugating a metal flat foil, for example.

As the most suitable heat-resistant alloy, a ferritic stainless steel containing Cr: 20 mass%, Al: 5 mass%, and the balance of Fe and unavoidable impurities (in other words, an Fe-20Cr-5Al alloy) may be used. It is also possible to use ferritic stainless steels joined with a Ni-based brazing material having a high heat resistance. Note that the heat-resistant alloy applicable to the present invention is not limited to the aforementioned ferritic stainless steel, and various heat-resistant stainless steels containing Al in the alloy composition may be widely used. That is, the metal foil used for the honeycomb body 4 usually contains 15 to 25 mass% of Cr and 2 to 8 mass% of Al, and an Fe-18Cr-3Al alloy, an Fe-20Cr-8Al alloy, etc., may also be used as the heat-resistant alloy.

The catalyst can be supported on the metal foil by applying a predetermined wash-coat liquid to the surface of the metal foil of the honeycomb body 4, and drying and firing this wash-coat liquid. For the wash-coat liquid, for example, a slurry obtained by stirring $\gamma$-alumina powder, lanthanum oxide, zirconium oxide, and cerium oxide in an aqueous solution of palladium nitrate may be used.

For example, stainless steel may be used for the outer mantle 5. The thickness of the outer mantle 5 is preferably 0.5 mm or more and 3 mm or less. The cell density of the honeycomb body 4 is preferably 100 cells to 600 cells per square inch.

The catalytic converter 1 is disposed in a not-shown exhaust pipe of a vehicle in such a manner that an exhaust gas can flow in from one end side and can be discharged from the other end side in the axial direction. Reaction of the catalyst supported on the catalytic converter 1 with the exhaust gas removes pollutants from the exhaust gas having flowed into the catalytic converter 1.

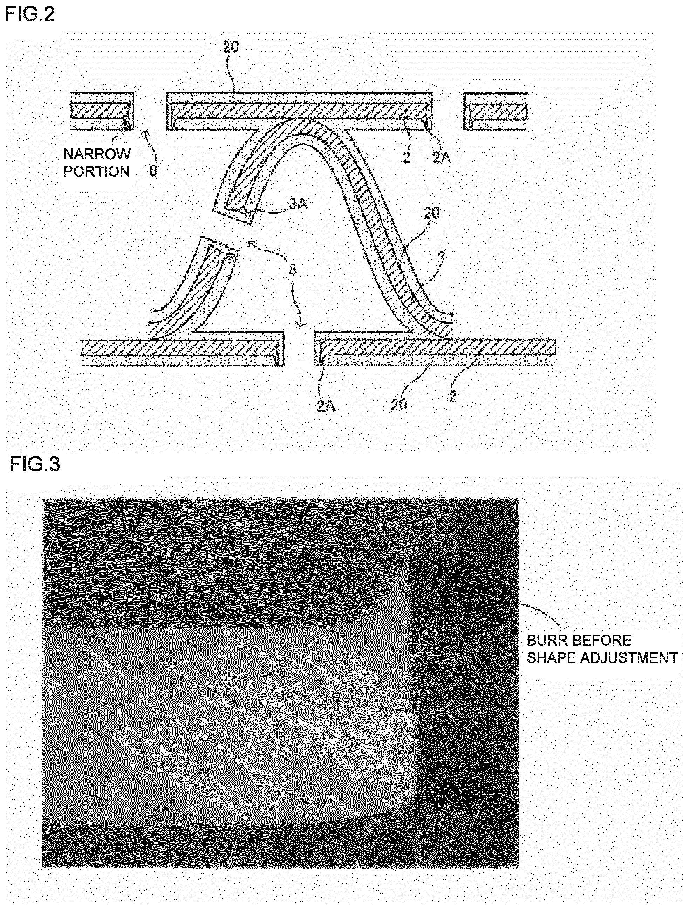

Figure 2 is a cross-sectional view of a part of the honeycomb body 4 cut in the radial direction. The flat foil 2 and the corrugated foil 3 each include a plurality of holes 8 penetrating the foil in the thickness direction. The arrangement of the holes 8 is not particularly limited, for example, in a developed state before being formed into the honeycomb body 4, the metal foil in which the holes 8 are formed in a checkerboard pattern or a zigzag pattern may be used. Normally, a gas flow in the metal substrate including the metal foil with no holes is a laminar flow. When the metal foil has holes, the Reynolds number is partially increased in portions having the holes, and turbulence is likely to be generated; and as a result, the emission control performance is improved. However, excessive turbulence is not preferable because this causes increase in pressure loss. The present invention suppresses excessive turbulence by limiting the hole diameter and the aperture ratio of the holes 8 to predetermined ranges and by limiting the heights of the burrs to small heights; and deterioration in emission control performance due to the limitation on the turbulence is compensated for by the reaction source (in other words, the fire source) effect of burrs. This will be described later in detail.

A burr 2A that is buried in a catalyst layer 20 and extends in the circumferential direction is formed on the edge of each hole 8 of the flat foil 2. A burr 3A that is buried in the catalyst layer 20 and extends in the circumferential direction is formed on the edge of each hole 8 of the corrugated foil 3. The burrs 2A, 3A are projections that are naturally formed at the time of forming holes in the metal foil using a hole-opening tool, and are also called flashes. Because burrs are generally unnecessary projections, they are removed in a deburring step; however, in the present invention, by performing the shape adjustment step, burrs are left as a structure for improving the emission control performance. Although the type of hole-opening tool is not particularly limited, continuous hole-forming can be performed using a die of a punching press, a rotary punching machine, or the like.

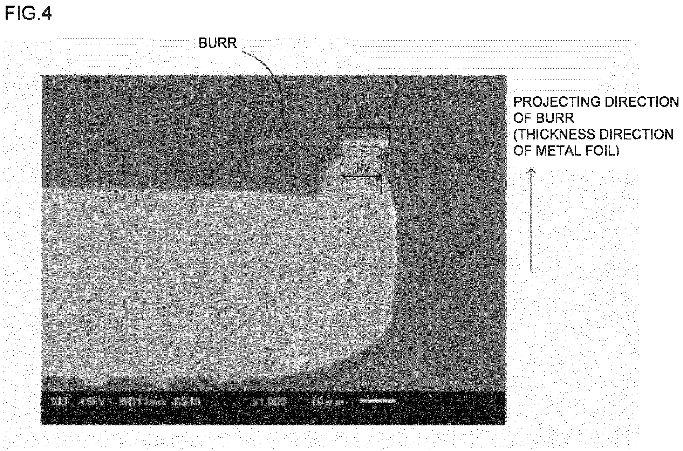

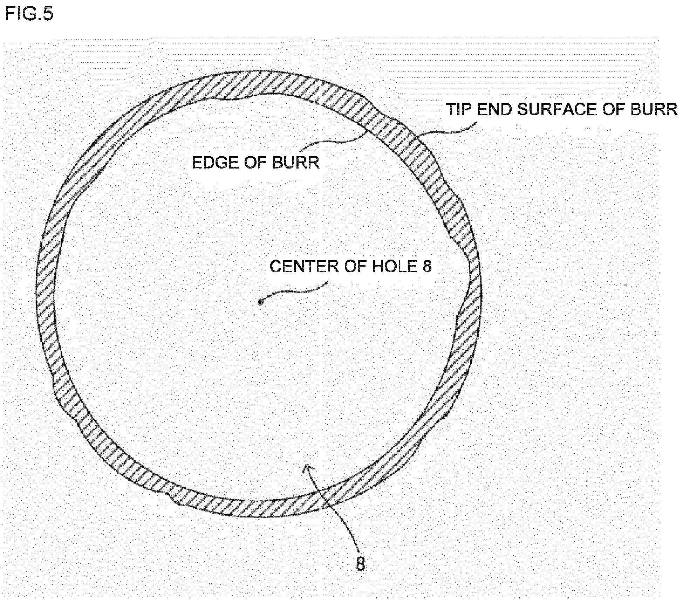

The structure of the burrs 2A, 3A will be described in detail with reference to Figure 3, Figure 4, and Figure 5. Figure 3 is a photograph of a cross section of a burr before the shape adjustment (in other words, a burr immediately after punching). Figure 4 is a photograph of the cross section of the burr after the shape adjustment. Figure 5 is a schematic view showing the tip end surface of the burr extending around the hole.

With reference to Figure 3, the burr before the shape adjustment has a sharp tip end; thus, when the catalyst layer is formed on the flat foil (corrugated foil), the burr projects excessively from the catalyst layer. In this case, an exhaust gas collides with the burrs projecting from the catalyst layer, which causes excessive turbulence and increase in pressure loss.

Referring to Figure 4, the tip end surfaces of the burrs 2A, 3A extend in a direction orthogonal to the projecting direction of the burrs. The projecting direction of the burrs is thickness direction of the metal foil. As indicated by hatching in Figure 5, the term "extend" means that "the tip end surfaces of the burrs 2A, 3A are present and spread in the radial direction from the edges of the holes 8"; and the degree of spreading at each circumferential position is not necessarily uniform. In addition, the tip end surfaces of the burrs 2A, 3A may be flat or have fine irregularities formed thereon.

Further, as shown in Figure 4, the burrs 2A, 3A are each formed to have a narrow portion 50; and when the width of the tip end surface is defined as P1 and the width of the narrow portion 50 is defined as P2, the magnitude relationship between P1 and P2 is P1 > P2. The width means a width in the radial direction of each hole 8.

The emission control performance of the catalytic converter 1 can be improved by providing the burrs 2A, 3A with small heights. Although the reason for this improvement is not necessarily clear, it can be presumed as follows. The burrs 2A, 3A having small heights have a small heat capacity and tend to increase in temperature when the exhaust gas flows in. On the other hand, since these burrs are buried in the catalyst layer 20, accumulated heat is difficult to be deprived by the gas. Hence, expansion of a catalytic reaction region starting from the burrs occurs although the exhaust gas temperature is low, and thus the catalytic reaction of the honeycomb body 4 as a whole is activated.

In other words, the catalyst supported on and around the burrs acts as reaction sources that determine the start and end of the catalytic reaction, and the catalytic reaction can be activated at an early stage by lowering the temperature of the exhaust gas when the reaction sources generate and disappear. In the following description, the effect by the burrs 2A, 3A is also referred to as the reaction source effect. By forming each tip end surface of the burrs 2A, 3A into a shape extending in the direction orthogonal to the projecting direction of the burr, as compared with a burr having the same height and a sharp tip end (including a burr of the second embodiment described later), the contact area with the catalyst is increased and thereby the above-described reaction source effect can be enhanced.

The average height of the burrs 2A, 3A (hereinafter, also referred to as an average height of the burrs L) after the shape adjustment is 0.1 $\mu$m or more and 30 $\mu$m or less, preferably 0.5 $\mu$m or more and 20 $\mu$m or less. By adjusting the height of the burrs 2A, 3A to 0.1 $\mu$m or more and 30 $\mu$m or less, the reaction source effect can be exerted.

When the average height of the burrs L is reduced to less than 0.1 $\mu$m, heat energy accumulated in the burrs 2A, 3A becomes too small to sufficiently exert the reaction source effect. When the average height of the burrs L becomes more than 30 $\mu$m, the tip ends of the burrs 2A, 3A projecting through the catalyst layer 20 come into contact with the gas, to release the heat; therefore, the reaction source effect becomes difficult to be exerted, and the exhaust gas comes into contact with the burrs 2A, 3A to generate turbulence and increase the pressure loss. By limiting the average height of the burrs L to 0.5 $\mu$m or more and 20 $\mu$m or less, the aforementioned reaction source effect and the like can be obtained more easily.

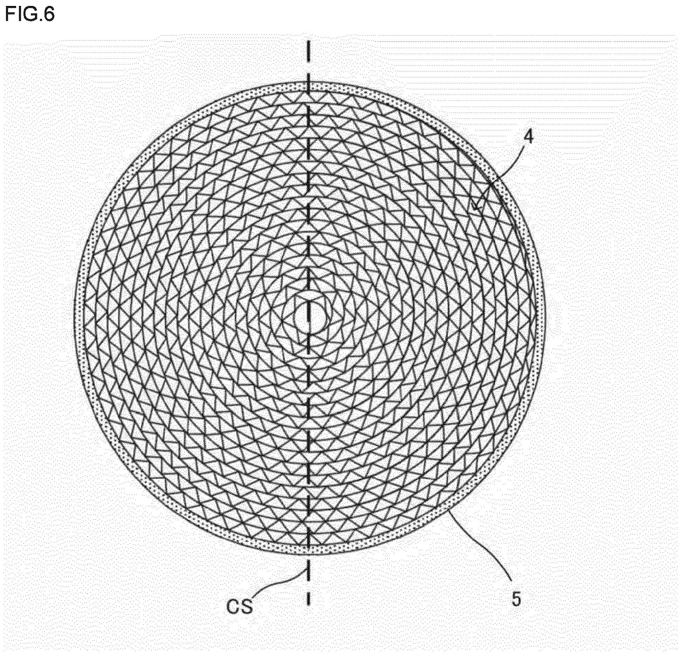

Figure 6 is a plan view of the catalytic converter 1 as viewed from the axial direction. With reference to this drawing, the average height of the burrs L can be found by cutting the converter 1 along a plane including the central axis ("CS" indicated by a dotted line) and measuring the height of every burr appearing on this cut surface using image analysis, then summing up these measurements, and further dividing this summed value by the number of measurements. When the measurement is performed, it is desirable to fill gas flow passages (gaps) of the honeycomb body 4 with resin. The burr height can be found from a difference between the foil thickness of the metal foil and the length from one end in the foil thickness direction of the metal foil to the tip end of the burr.

As another measurement method, the burr height of every hole 8 can be found by unwinding the honeycomb body 4, and subsequently imaging the metal foil (the flat foil 2 or the base material of the corrugated foil 3) by an image-size measurement device equipped with an imaging device (CMOS sensor, etc.) to obtain an image along the circumferential direction of the hole 8. In this case, the average height of the burrs L can be found by dividing the summed value of the measured burr heights by the number of measurements.

Further, after the honeycomb body 4 is unwound, the burr height of every hole 8 formed in the metal foil (the base material of the flat foil 2 or the corrugated foil 3) can be found using a micrometer. The average height of the burrs L can be found by dividing the summed value of the measured burr heights by the number of measurements.

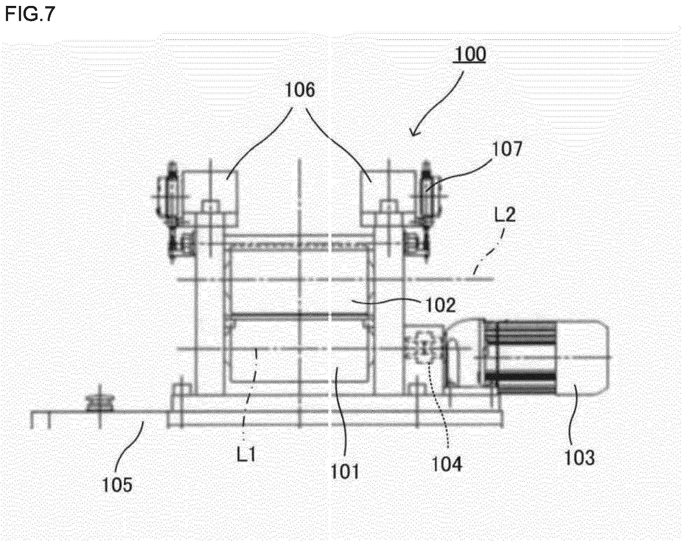

The adjustment method for adjusting the shapes of the burrs 2A, 3A will be described with reference to Figure 7. Figure 7 is a schematic view of a shape adjustment device as viewed from the feeding side of the metal foil. The shape adjustment device 100 includes a drive roller 101, a driven roller 102, a drive motor 103, a transmission mechanism 104, a fixing stand 105, a hydraulic mechanism 106, and a digital indicator 107. The drive motor 103 is connected to the drive roller 101 via the transmission mechanism 104, and when the drive motor 103 is operated, driving force of the drive motor 103 is transmitted to the drive roller 101 via the transmission mechanism 104 and thereby the drive roller 101 rotates around a rotation axis L1.

The driven roller 102 is arranged immediately above the drive roller 101 and is pushed toward the approaching side to the drive roller 101 by the hydraulic mechanism 106. Therefore, the driven roller 102 rotates along with the drive roller 101. The metal foil can be slipped in between the drive roller 101 and the driven roller 102 (i.e., a nip part).

The nip pressure between the drive roller 101 and the driven roller 102 can be adjusted by the hydraulic mechanism 106. The nip pressure can be measured by the indicator 107. Not-shown guide rollers are arranged upstream of the drive roller 101 and the driven roller 102. The hydraulic mechanism 106, a gearbox of the transmission mechanism 104, and the drive motor 103 are fixed onto the fixing stand 105.

In the above-described configuration, a metal foil having holes with burrs formed by a punching device is prepared, and this foil is fed into the nip part between the drive roller 101 and the driven roller 102 via the not-shown guide rollers. The drive roller 101 is brought to rotate clockwise as viewed from the drive motor 103 side, the metal foil is pulled into the nip part between the drive roller 101 and the driven roller 102, and the drive roller 101 (the driven roller 102) comes into contact with the burrs of the metal foil.

When the drive roller 101 and the driven roller 102 are further brought to rotate, the burrs are pressed and crushed by these rollers to form the narrow portions 50 of the burrs 2A, 3A. It is preferable to previously obtain the nip pressure used for forming the burrs 2A, 3A as desired through experiments or the like. Note that the metal foil for the corrugated foil 3 is conveyed to a corrugated-foil formation step after the shape adjustment by the shape adjustment device 100. In the corrugated-foil formation step, for example, the corrugated foil 3 can be manufactured by bringing a gear having a shape corresponding to the shape of the corrugated foil to contact with the metal foil to plastically deform this metal foil.

The shape adjustment method of the burrs 2A, 3A is not limited to the method by the shape adjustment device 100; and for example, in the punching step of the metal foil, the shape adjustment may be performed by arranging a baffle plate to reduce the projections of the burrs. In this case, the burrs formed at the time of punching abut to the baffle plate to be plastically deformed and thereby the burrs 2A, 3A as shown in Figure 2 can be formed at the edges of the holes 8.

The thickness of the catalyst layer 20 can be appropriately set in relationship with the average height of the burrs L. That is, as described above, as the amount of projection of the burrs 2A, 3A projecting from the catalyst layer 20 becomes greater, deterioration of the reaction source effect and generation of turbulence become more significant. Therefore, when the thickness of the catalyst layer 20 is set to be equal to or larger than the average height of the burrs L or when the average height of the burrs L is larger than the catalyst layer 20, it is preferable to limit the difference (equivalent to a predetermined amount) between the average height of the burrs L and the thickness of the catalyst layer 20 to 10 $\mu$m or less.

Here, when the average hole diameter of the holes 8 is defined as D, the average hole diameter D is 1.1 mm or more and 4.0 mm or less. The hole diameter of each hole 8 is a diameter thereof. When the average hole diameter D is decreased less than 1.1 mm, the holes 8 are clogged with the catalyst and the turbulence is excessively reduced. Consequently, it is impossible to maintain the emission control performance at a desired level only by the reaction source effect by the burrs 2A, 3A. When the average hole diameter D is greater than 4.0 mm, the sum of edge lengths of the holes 8 (that is, the total edge length of the holes 8 in the entire the honeycomb body 4) becomes smaller, and even by providing the burrs, the total length of the burrs is too short to sufficiently improve the emission control performance.

In the above-described embodiment, it is exemplified that the shape of each hole 8 is circular; however, this may be other shapes. Other shapes may include various shapes, such as elliptic or rectangular. In any of these shapes, the hole diameter can be found by converting the area into a circle.

The hole diameter of each hole 8 can be controlled by a punch diameter and a die diameter of a die. The hole diameter of each hole 8 is not necessarily to be the same; however, from the viewpoint of easiness of the machining, etc., it is preferable to manufacture the holes such that the standard deviation $\sigma$ is 0.001 mm or more and 0.5 mm or less.

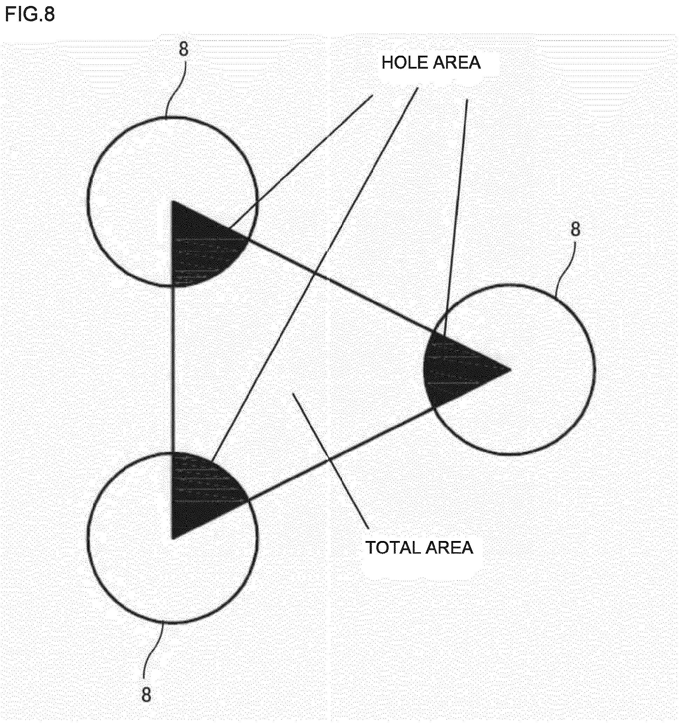

When the aperture ratio of the holes 8 is defined as R, the aperture ratio R is 5% or more and 70% or less, and preferably 20% or more and 70% or less. Here, the aperture ratio R is a value calculated as a ratio of a sum total of areas of blackened holes to an entire area surrounded by a triangle as shown in Figure 8. That is, when a triangle is drawn by connecting the centers of three adjacent holes 8 with lines and an area inside the triangle is defined as an entire area, and areas of parts where the triangle overlaps with the holes 8 are defined as hole areas, a ratio of the hole areas to the entire area is defined as the aperture ratio R.

When the aperture ratio R is decreased to less than 5%, the sum of the edge lengths of the holes 8 becomes too small to sufficiently improve the emission control performance even by providing the burrs. When the aperture ratio R is more than 70%, the rigidity of the honeycomb body 4 becomes decreased, so that cracks and fractures of the flat foil 2 and the corrugated foil 3 might result in an early failure of the catalytic converter 1.

(Modifications)

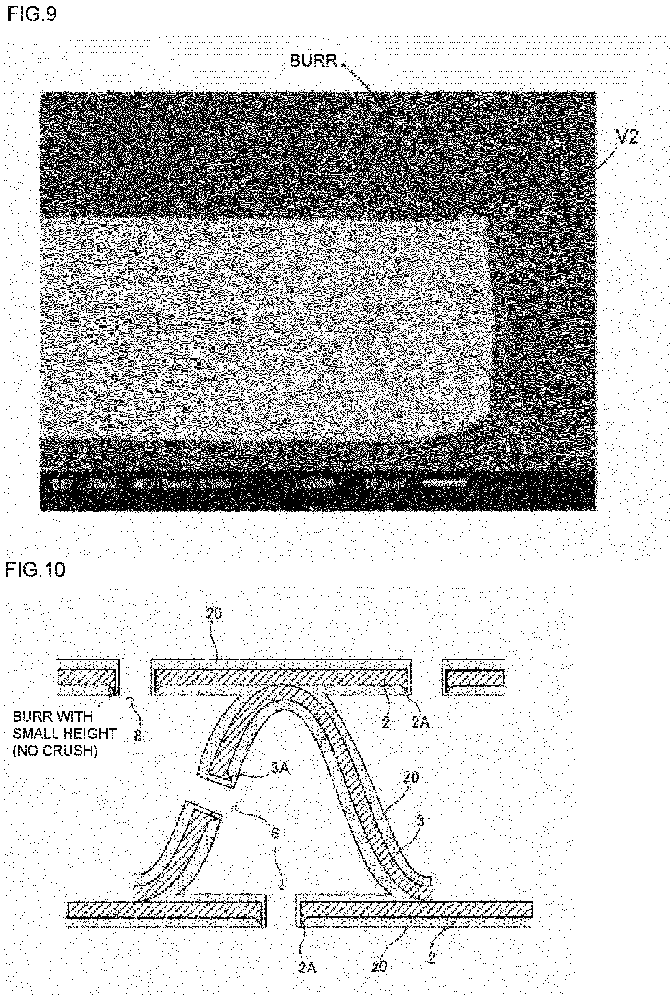

Modifications of the present invention will be described. In the catalytic converter 1 of the present modification, the burrs 2A, 3A include burrs having no narrow portions. In the present modification, for convenience of explanation, a burr having a narrow portion (that is, the burr shown in Figure 4) is referred to as a burr V1, and a burr having no narrow portion (that is, the burr shown in Figure 9) is referred to as a burr V2. The present inventors have confirmed that the burrs V1 relatively decrease and the burrs V2 relatively increase as the pressure of the roll press increases. Also in the catalytic converter 1 where the burrs V1 and V2 are mixed, it is possible to obtain the same effect as that of the first embodiment, such as the reaction source effect, by satisfying the predetermined numerical conditions.

Although already having been described in the first embodiment, the predetermined numerical conditions are described again, and these are 1.1 mm $\leq$ D $\leq$ 4.0 mm, 5% $\leq$ R $\leq$ 70%, 0.1 $\mu$m $\leq$ L $\leq$ 30 $\mu$m.

Figure 9 is a photograph of the burr V2. With reference to this drawing, the burr V2 is the same as the burr V1 in that the tip end surface extends in a direction orthogonal to the projecting direction of the burr, and is different from the burr V1 in that the burr V2 has no narrow portion 50. This might be presumed that when a needle-like burr is pressed by the shape adjustment device 100 while the hydraulic pressure of the hydraulic mechanism 106 is increased, a narrow portion like that of the burr V1 is first formed, and when the pressure is further increased, the narrow portion is crushed into a step-like burr having no narrow portion 50, as shown in Figure 9.

In the case in which the burrs V1 and V2 are mixed as in the present embodiment, the burr height may be found without distinguishing these burrs so as to calculate the average height of the burrs L.

(Second embodiment)

The second embodiment of the present invention will be described with reference to Figure 10. Figure 10 corresponds to Figure 2, and is a cross-sectional view of a part of the honeycomb body. Components having common functions to those of the first embodiment are denoted by the same reference numerals. In the burrs 2A, 3A of the present embodiment, the shape adjustment step is not performed, and the average height L of the burrs 2A is set to 0.1 $\mu$m or more and 30 $\mu$m or less. Specifically, by increasing the punching speed of the punching press, the height of the burr 2A can be reduced and the average height L of the burrs 2A can be reduced to 0.1 $\mu$m or more and 30 $\mu$m or less. The punching speed of the punching press is preferably 100 mm/sec or more.

Therefore, the burr 2A of the present embodiment has a general burr shape with a sharp tip end (i.e., a needle-like tip end), which is different from the burr shape of the first embodiment having the tip end surface extending in the direction orthogonal to the projecting direction of the burr. The other configurations are the same as those of the first embodiment; therefore, detailed description thereof is omitted, but the summary is as follows.

The thickness and the material of the metal foil forming the flat foil 2 and the corrugated foil 3, the catalyst, and the outer mantle 5 are the same as those in the first embodiment.

The average height of the burrs L of the burrs 2A, 3A is preferably 0.5 $\mu$m or more and 20 $\mu$m or less, which is the same as that in the first embodiment. The method of measuring the average height of the burrs L is also the same as that in the first embodiment.

As the amount of projection of the burrs 2A, 3A projecting from the catalyst layer 20 becomes greater, deterioration of the reaction source effect and generation of turbulence become more significant. Therefore, when the thickness of the catalyst layer 20 is set to be equal to or larger than the average height of the burrs L, or when the average height of the burrs L is larger than the catalyst layer 20, it is preferable to set the difference between the average height of the burrs L and the thickness of the catalyst layer 20 (equivalent to the predetermined amount) to 10 $\mu$m or less.

The average hole diameter D is 1.1 mm or more and 4.0 mm or less, which is also the same as in the first embodiment. The shape of the hole 8 is not limited to circular, as in the first embodiment. It is preferable to manufacture the holes such that the standard deviation $\sigma$ is 0.001 mm or more and 0.5 mm or less, which is the same as in the first embodiment. The aperture ratio R of the holes 8 is 5% or more and 70% less, preferably 20% or more and 70 % or less, which is the same as in the first embodiment.

As described above, by providing the burrs 2A, 3A of the present embodiment, it is possible to obtain the same effect as that of the first embodiment.

Embodiment examples

Hereinafter, the present invention will be described in detail with reference to Embodiment examples.

(Embodiment example 1)

Embodiment example 1 corresponds to the configuration of the first embodiment.

In the present Embodiment example, the emission control performance and the pressure loss performance were evaluated by various changing the average height of the burrs L. As the metal foil used for the corrugated foil and the flat foil, a ferritic stainless steel containing Cr: 20 mass%, Al: 5 mass%, and the balance of Fe and unavoidable impurities was used. The thickness of the metal foil was 50 $\mu$m, and the width thereof was 80 mm. Using a punching press, holes were formed in a region excluding ends (respective ranges of 5 mm from the exhaust gas inlet side and from the exhaust gas outlet side) of a honeycomb body. The average height of the burrs L was adjusted by the shape adjustment device. The average height of the burrs L was measured by the method described in the embodiment as described with reference to Figure 6 (the same applies to other Embodiment examples described later).

In No. 1 and No. 2, the deburring step was carried out without performing the shape adjustment using the shape adjustment device. In No. 3 to No. 5, the burrs V2 were observed in about 30%, but the others were burrs V1 with the narrow portions. In No. 6 to No. 13, the burrs V1 with the narrow portions were dominant.

After the adjustment of the average height of the burrs L, a region of the metal foil where the holes were formed was imaged from the foil thickness direction of the metal foil, and contours of the holes were converted into data; and thereafter, the hole diameter was found by converting the obtained hole diameter to a circle diameter through computer processing. The aperture ratio R was found by the method described in the above embodiment.

After the metal foil obtained by the above-described processing was corrugated into a corrugated foil, the corrugated foil coated with a brazing material at appropriate positions was laid on the flat foil, and these foils were wound together and were subjected to heat treatment (brazing), to thereby produce the honeycomb body. The core diameter of the honeycomb body was 39 mm, and the core height thereof was 80 mm. In this case, the cell density was 400 cpsi. The honeycomb body thus produced was inserted into an outer mantle made of SUS and was fixed thereto by brazing. The thickness of the outer mantle was set to 1.0 mm.

A wash-coat liquid containing ceria-zirconia-lanthana-alumina as main components and containing 1.25 g of palladium per 100 g was brought to pass through the honeycomb body, and an excessive wash-coat liquid was removed; and thereafter, the honeycomb body was dried at 180°C for 1 hour and then baked at 500°C for 2 hours to form a catalyst layer with a thickness of 20 $\mu$m on the honeycomb body.

The emission control performance was evaluated by T80. T80 is a temperature when CO conversion (%), calculated based on the CO conversion-temperature curve, reaches 80%. The CO conversion-temperature curve was obtained by feeding a simulated gas through the honeycomb body at an SV (space velocity) of 100,000 $h^{-1}$, gradually heating the simulated gas using a heater from a room temperature, and measuring the CO conversion (%) at each temperature. Using THC (propane, $C_3H_6$): 550 ppm (1650 ppmC), NO: 500 ppm, CO: 0.5%, $O_2$: 1.5%, $H_2O$: 10%, $N_2$: a balance gas, a diesel exhaust gas was simulated. The pressure loss was evaluated by feeding room-temperature air, which is adjusted to a predetermined flow rate, toward the catalytic converter, and measuring a difference in pressure before and after the catalytic converter.

The pressure loss performance was measured by feeding an $N_2$ gas dried at 25°C at a flow rate of 0.12 $Nm^3$/min.

Table 1 shows the emission control performance and the pressure loss performance when the average height of the burrs L was variously changed.

[Table 1]

| No. | Catalyst layer thickness $\mu$m | Average height of burrs $\mu$m | Hole diameter mm | Aperture ratio % | T80 °C | Pressure loss Pa | Note |
|-----|-----|-----|-----|-----|-----|-----|-----|
| 1 | 20 | 0 | 2 | 50 | 200 | 80 | Comparative Example 1 |
| 2 | 20 | 0.05 | 2 | 50 | 200 | 80 | Comparative Example 2 |
| 3 | 20 | 0.1 | 2 | 50 | 193 | 80 | Inventive Example 1 |
| 4 | 20 | 0.5 | 2 | 50 | 188 | 80 | Inventive Example 2 |
| 5 | 20 | 1 | 2 | 50 | 187 | 80 | Inventive Example 3 |
| 6 | 20 | 5 | 2 | 50 | 185 | 80 | Inventive Example 4 |
| 7 | 20 | 10 | 2 | 50 | 185 | 80 | Inventive Example 5 |
| 8 | 20 | 15 | 2 | 50 | 186 | 80 | Inventive Example 6 |
| 9 | 20 | 20 | 2 | 50 | 187 | 80 | Inventive Example 7 |
| 10 | 20 | 25 | 2 | 50 | 190 | 82 | Inventive Example 8 |
| 11 | 20 | 30 | 2 | 50 | 193 | 84 | Inventive Example 9 |
| 12 | 20 | 35 | 2 | 50 | 200 | 90 | Comparative Example 3 |
| 13 | 20 | 40 | 2 | 50 | 200 | 98 | Comparative Example 4 |

With reference to each of Comparative Examples 1 and 2, the average height of the burrs L is low and the reaction source effect is not sufficient, resulting in deterioration of the emission control performance. In each of Inventive Examples 8 and 9, it is presumed that since the burrs slightly project from the catalyst layer, the pressure loss becomes increased and the reaction source effect slightly becomes decreased. From these Inventive Examples 8 and 9, it is found that when the difference between the average height of the burrs L and the thickness of the catalyst layer is 10 $\mu$m or less, increase in pressure loss and deterioration of the reaction source effect can be suppressed to a certain level. In each of Comparative Examples 3 and 4, it is presumed that since the burrs project excessively from the catalyst layer, the pressure loss becomes greatly increased and the reaction source effect also becomes decreased significantly.

(Embodiment example 2)

Embodiment example 2 corresponds to the first embodiment.

In the present Embodiment example, the emission control performance and the pressure loss performance were evaluated by variously changing the average hole diameter D.

As the metal foil used for the corrugated foil and the flat foil, a ferritic stainless steel containing Cr: 20 mass%, Al: 5 mass%, and the balance of Fe and unavoidable impurities was used. The thickness of the metal foil was 30 $\mu$m, and the width thereof was 115 mm. Using the punching press, holes were formed in a region excluding ends (respective ranges of 3 mm from the exhaust gas inlet side and the exhaust gas outlet side side) of a honeycomb body. The average height of the burrs L was adjusted by the shape adjustment device.

In No. 14 to No. 19, the burrs were removed in the deburring step without using the shape adjustment device. In each of No. 20 to No. 25, the burrs V2 were observed in about 30%, but the others were the burrs V1 with the narrow portions. In each of No. 26 to No. 31, the burrs V1 with the narrow portions were dominant. After the adjustment of the average height of the burrs L, a region of the metal foil where holes were formed was imaged, and contours of the holes were converted into data; and thereafter, the hole diameter was found by converting the obtained hole diameter to a circle diameter through computer processing. The aperture ratio R was found by the method described in the above embodiment.

After the metal foil obtained by the above-described processing was corrugated into a corrugated foil, the corrugated foil with a brazing material at appropriate positions was laid on the flat foil coated, and these foils were wound together, and were subjected to heat treatment (brazing), to thereby produce the honeycomb body. The core diameter of the honeycomb body was 51 mm, and the core height was 115 mm. In this case, the cell density was 400 cpsi. The honeycomb body thus produced was inserted into an outer mantle made of SUS and was fixed thereto by brazing. The thickness of the outer mantle was set to 1.5 mm.

A wash-coat liquid containing ceria-zirconia-lanthana-alumina as main components and containing 1.25 g of palladium per 100 g was brought to pass through the honeycomb body, and an excessive wash-coat liquid was removed; and thereafter, the honeycomb body was dried at 180°C for 1 hour and then baked at 500°C for 2 hours to form a catalyst layer with a thickness of 20 $\mu$m on the honeycomb body. The emission control performance and the pressure loss performance were evaluated under the same conditions as those in Embodiment example 1. Table 2 shows the emission control performance and the pressure loss performance when the average hole diameter D was variously changed.

[Table 2]

| No. | Catalyst layer thickness $\mu$m | Average height of burrs $\mu$m | Hole diameter mm | Aperture ratio % | T80 °C | Pressure loss Pa | Note |
|---|---|---|---|---|---|---|---|
| 14 | 20 | 0 | 0.5 | 40 | 208 | 65 | Comparative Example 5 |
| 15 | 20 | 0 | 1.1 | 40 | 206 | 67 | Comparative Example 6 |
| 16 | 20 | 0 | 2 | 40 | 206 | 69 | Comparative Example 7 |
| 17 | 20 | 0 | 3 | 40 | 206 | 75 | Comparative Example 8 |
| 18 | 20 | 0 | 4 | 40 | 206 | 78 | Comparative Example 9 |
| 19 | 20 | 0 | 4.5 | 40 | 206 | 78 | Comparative Example 10 |
| 20 | 20 | 1 | 0.5 | 40 | 208 | 65 | Comparative Example 11 |
| 21 | 20 | 1 | 1.1 | 40 | 195 | 67 | Inventive Example 10 |
| 22 | 20 | 1 | 2 | 40 | 193 | 69 | Inventive Example 11 |
| 23 | 20 | 1 | 3 | 40 | 194 | 75 | Inventive Example 12 |
| 24 | 20 | 1 | 4 | 40 | 196 | 78 | Inventive Example 13 |
| 25 | 20 | 1 | 4.5 | 40 | 206 | 78 | Comparative Example 12 |
| 26 | 20 | 10 | 0.5 | 40 | 208 | 65 | Comparative Example 13 |
| 27 | 20 | 10 | 1.1 | 40 | 193 | 67 | Inventive Example 14 |
| 28 | 20 | 10 | 2 | 40 | 191 | 69 | Inventive Example 15 |
| 29 | 20 | 10 | 3 | 40 | 192 | 75 | Inventive Example 16 |
| 30 | 20 | 10 | 4 | 40 | 194 | 78 | Inventive Example 17 |
| 31 | 20 | 10 | 4.5 | 40 | 206 | 78 | Comparative Example 14 |

In each of Comparative Examples 5, 11 and 13, since the average hole diameter D is excessively small and the holes 8 are clogged with the catalyst, the emission control performance is hardly improved even by providing the burrs. In each of Comparative Examples 12 and 14, since the average hole diameter D is excessively large and the total length of the burrs is short, the emission control performance cannot be improved.

Comparatively referring to each of Inventive Examples 10 to 13, it is found that the desired emission control performance can be ensured by providing the burrs even when the average hole diameter D is small. Similarly, comparatively referring to each of Inventive Examples 14 to 17, it is found that the desired emission control performance can be ensured by providing the burrs even when the average hole diameter D is small.

(Embodiment example 3)

Embodiment example 3 corresponds to the first embodiment.

The emission control performance and the pressure loss performance were evaluated when the aperture ratio R was variously changed. As the metal foil used for the corrugated foil and the flat foil, a ferritic stainless steel containing Cr: 20 mass%, Al: 5 mass%, and the balance of Fe and unavoidable impurities was used. The thickness of the metal foil was 40 $\mu$m, and the width thereof was 60 mm. Using the punching press, holes were formed in a region excluding ends (respective ranges of 5 mm from the exhaust gas inlet side and the exhaust gas outlet side) of a honeycomb body. The average height of the burrs L was adjusted by the shape adjustment device.

In each of No. 32 to No. 44, the deburring step was performed without using the shape adjustment device. In each of No. 45 to No. 57, the burrs V2 were observed in about 20%, but the others were the burrs V1 with the narrow portions. In each of No. 58 to No. 70, the burrs V1 with the narrow portions were dominant. After adjustment of the average height of the burrs L, a region of the metal foil where holes were formed was imaged, and contours of the holes were converted into data; and thereafter, the hole diameter was found by converting the obtained hole diameter to a circle diameter through computer processing. The aperture ratio R was found by the method described in the above embodiment.

After the metal foil obtained by the above-described processing was corrugated into a corrugated foil, the corrugated foil coated with a brazing material at appropriate positions was laid on the flat foil, and these foils were wound together, and were subjected to heat treatment (brazing), to thereby produce the honeycomb body. The core diameter of the honeycomb body was 51 mm, and the core height was 115 mm. In this case, the cell density was 400 cpsi. The honeycomb body thus produced was inserted into an outer mantle made of SUS and was fixed thereto by brazing. The thickness of the outer mantle was set to 1.0 mm. The wash-coat liquid containing ceria-zirconia-lanthana-alumina as main components and containing 1.25 g of palladium per 100 g was brought to pass through the honeycomb body, and an excessive wash-coat liquid was removed; and thereafter, the honeycomb body was dried at 180°C for 1 hour and then baked at 500 °C for 2 hours to form a catalyst layer with a thickness of 20 $\mu$m on the honeycomb body.

The emission control performance was evaluated under the same conditions as those in Embodiment example 1. The pressure loss performance was measured by feeding an $N_2$ gas dried at 25°C at a flow rate of 0.20 Nm$^3$/min.

Table 3 shows the emission control performance and the pressure loss performance when the aperture ratio R was variously changed.

[Table 3]

| No. | Catalyst layer thickness $\mu$m | Average height of burrs $\mu$m | Hole diameter mm | Aperture ratio % | T80 °C | Pressure loss Pa | Note |
|---|---|---|---|---|---|---|---|
| 32 | 20 | 0.05 | 2.5 | 3 | 222 | 80 | Comparative Example 15 |
| 33 | 20 | 0.05 | 2.5 | 5 | 221.8 | 83 | Comparative Example 16 |
| 34 | 20 | 0.05 | 2.5 | 10 | 221.5 | 85 | Comparative Example 17 |
| 35 | 20 | 0.05 | 2.5 | 15 | 221 | 87 | Comparative Example 18 |
| 36 | 20 | 0.05 | 2.5 | 20 | 220.2 | 90 | Comparative Example 19 |
| 37 | 20 | 0.05 | 2.5 | 25 | 219.4 | 92 | Comparative Example 20 |
| 38 | 20 | 0.05 | 2.5 | 35 | 218 | 95 | Comparative Example 21 |
| 39 | 20 | 0.05 | 2.5 | 45 | 216.8 | 98 | Comparative Example 22 |
| 40 | 20 | 0.05 | 2.5 | 55 | 215.3 | 101 | Comparative Example 23 |
| 41 | 20 | 0.05 | 2.5 | 60 | 214.7 | 104 | Comparative Example 24 |

(continued)

| No. | Catalyst layer thickness $\mu$m | Average height of burrs $\mu$m | Hole diameter mm | Aperture ratio % | T80 °C | Pressure loss Pa | Note |
|---|---|---|---|---|---|---|---|
| 42 | 20 | 0.05 | 2.5 | 65 | 214 | 106 | Comparative Example 25 |
| 43 | 20 | 0.05 | 2.5 | 70 | 213.2 | 108 | Comparative Example 26 |
| 44 | 20 | 0.05 | 2.5 | 73 | 212.5 | 110 | Comparative Example 27 |
| 45 | 20 | 1.5 | 2.5 | 3 | 222 | 80 | Comparative Example 28 |
| 46 | 20 | 1.5 | 2.5 | 5 | 219.5 | 83 | Inventive Example 18 |
| 47 | 20 | 1.5 | 2.5 | 10 | 219 | 85 | Inventive Example 19 |
| 48 | 20 | 1.5 | 2.5 | 15 | 217.9 | 87 | Inventive Example 20 |
| 49 | 20 | 1.5 | 2.5 | 20 | 216.3 | 90 | Inventive Example 21 |
| 50 | 20 | 1.5 | 2.5 | 25 | 215.4 | 92 | Inventive Example 22 |
| 51 | 20 | 1.5 | 2.5 | 35 | 213.1 | 95 | Inventive Example 23 |
| 52 | 20 | 1.5 | 2.5 | 45 | 211.8 | 98 | Inventive Example 24 |
| 53 | 20 | 1.5 | 2.5 | 55 | 210.4 | 101 | Inventive Example 25 |
| 54 | 20 | 1.5 | 2.5 | 60 | 210 | 104 | Inventive Example 26 |
| 55 | 20 | 1.5 | 2.5 | 65 | 209.4 | 106 | Inventive Example 27 |
| 56 | 20 | 1.5 | 2.5 | 70 | 209.1 | 108 | Inventive Example 28 |
| 57 | 20 | 1.5 | 2.5 | 73 | 211 | 110 | Comparative Example 29 |
| 58 | 20 | 8.0 | 2.5 | 3 | 222 | 80 | Comparative Example 30 |
| 59 | 20 | 8.0 | 2.5 | 5 | 218.9 | 83 | Inventive Example 29 |
| 60 | 20 | 8.0 | 2.5 | 10 | 217.9 | 85 | Inventive Example 30 |
| 61 | 20 | 8.0 | 2.5 | 15 | 216.8 | 87 | Inventive Example 31 |
| 62 | 20 | 8.0 | 2.5 | 20 | 214.9 | 90 | Inventive Example 32 |
| 63 | 20 | 8.0 | 2.5 | 25 | 213.8 | 92 | Inventive Example 33 |
| 64 | 20 | 8.0 | 2.5 | 35 | 211.1 | 95 | Inventive Example 34 |
| 65 | 20 | 8.0 | 2.5 | 45 | 209.8 | 98 | Inventive Example 35 |
| 66 | 20 | 8.0 | 2.5 | 55 | 208.8 | 101 | Inventive Example 38 |
| 67 | 20 | 8.0 | 2.5 | 60 | 208.6 | 104 | Inventive Example 37 |
| 68 | 20 | 8.0 | 2.5 | 65 | 208.2 | 106 | Inventive Example 38 |
| 69 | 20 | 8.0 | 2.5 | 70 | 207.9 | 108 | Inventive Example 39 |
| 70 | 20 | 8.0 | 2.5 | 73 | 210.1 | 110 | Comparative Example 31 |

It is presumed that by increasing the aperture ratio, the total length of the burrs is increased and thereby the emission control performance is improved. The samples of No. 44, 57, 70 were used as Comparative Examples because their aperture ratios were more than 70% and their structures were fragile.

(Embodiment example 4)

Embodiment example 4 corresponds to the second embodiment. In the present Embodiment example, the emission control performance and the pressure loss performance were evaluated by variously changing the average height of the burrs L. Table 4 shows the results. Comparative Examples 1 to 4 in Table 4 are the same as those in Table 1. The composition and the size of the metal foil were the same as those in Embodiment example 1. However, the average height of the burrs L was changed by adjusting the punching speed of the punching press without performing the height adjustment by the shape adjustment device.

[Table 4]

| No. | Catalyst layer thickness $\mu$m | Average height of burrs $\mu$m | Hole diameter mm | Aperture ratio % | T80 °C | Pressure loss Pa | Note |
|---|---|---|---|---|---|---|---|
| 71 | 20 | 0 | 2 | 50 | 200 | 80 | Comparative Example 1 |
| 72 | 20 | 0.05 | 2 | 50 | 200 | 80 | Comparative Example 2 |
| 73 | 20 | 0.1 | 2 | 50 | 195 | 80 | Inventive Example 40 |
| 74 | 20 | 0.5 | 2 | 50 | 190 | 80 | Inventive Example 41 |
| 75 | 20 | 1 | 2 | 50 | 189 | 80 | Inventive Example 42 |
| 76 | 20 | 5 | 2 | 50 | 187 | 80 | Inventive Example 43 |
| 77 | 20 | 10 | 2 | 50 | 187 | 80 | Inventive Example 44 |
| 78 | 20 | 15 | 2 | 50 | 188 | 80 | Inventive Example 45 |
| 79 | 20 | 20 | 2 | 50 | 189 | 80 | Inventive Example 46 |
| 80 | 20 | 25 | 2 | 50 | 193 | 82 | Inventive Example 47 |
| 81 | 20 | 30 | 2 | 50 | 195 | 84 | Inventive Example 48 |
| 82 | 20 | 35 | 2 | 50 | 200 | 90 | Comparative Example 3 |
| 83 | 20 | 40 | 2 | 50 | 200 | 98 | Comparative Example 4 |

With reference to each of Comparative Examples 1 and 2, the average height of the burrs L is low and the reaction source effect is not sufficient, resulting in deterioration of the emission control performance. In each of Inventive Examples 47 and 48, it is presumed that since the burrs slightly project from the catalyst layer, the pressure loss becomes increased and the reaction source effect becomes slightly decreased. From each of Inventive Examples 47 and 48, it is found that when the difference between the average height of the burrs L and the thickness of the catalyst layer is 10 $\mu$m or less, increase in pressure loss and deterioration of the reaction source effect can be suppressed to a certain level. In each of Comparative Examples 3 and 4, it is presumed that since the burrs project excessively from the catalyst layer, the pressure loss becomes greatly increased and the reaction source effect also becomes decreased significantly.

(Embodiment example 5)

Embodiment example 5 corresponds to the second embodiment. In the present Embodiment example, the emission control performance and the pressure loss performance were evaluated when the average hole diameter D was variously changed. Table 5 shows the results. Comparative Examples in Table 5 are the same as those in Table 2. The composition and the size of the metal foil were the same as those in Embodiment example 2. However, the average height of the burrs L was changed by adjusting the punching speed of the punching press without performing the height adjustment by the shape adjustment device.

[Table 5]

| No. | Catalyst layer thickness $\mu$m | Average height of burrs $\mu$m | Hole diameter mm | Aperture ratio % | T80 °C | Pressure loss Pa | Note |
|---|---|---|---|---|---|---|---|
| 84 | 20 | 0 | 0.5 | 40 | 208 | 65 | Comparative Example 5 |
| 85 | 20 | 0 | 1.1 | 40 | 206 | 67 | Comparative Example 6 |
| 86 | 20 | 0 | 2 | 40 | 206 | 69 | Comparative Example 7 |
| 87 | 20 | 0 | 3 | 40 | 206 | 75 | Comparative Example 8 |

(continued)

| No. | Catalyst layer thickness μm | Average height of burrs μm | Hole diameter mm | Aperture ratio % | T80 °C | Pressure loss Pa | Note |
|---|---|---|---|---|---|---|---|
| 88 | 20 | 0 | 4 | 40 | 206 | 78 | Comparative Example 9 |
| 89 | 20 | 0 | 4.5 | 40 | 206 | 78 | Comparative Example 10 |
| 90 | 20 | 1 | 0.5 | 40 | 208 | 65 | Comparative Example 11 |
| 91 | 20 | 1 | 1.1 | 40 | 197 | 67 | Inventive Example 49 |
| 92 | 20 | 1 | 2 | 40 | 195 | 69 | Inventive Example 50 |
| 93 | 20 | 1 | 3 | 40 | 196 | 75 | Inventive Example 51 |
| 94 | 20 | 1 | 4 | 40 | 198 | 78 | Inventive Example 52 |
| 95 | 20 | 1 | 4.5 | 40 | 206 | 78 | Comparative Example 12 |
| 96 | 20 | 10 | 0.5 | 40 | 208 | 65 | Comparative Example 13 |
| 97 | 20 | 10 | 1.1 | 40 | 195 | 67 | Inventive Example 53 |
| 98 | 20 | 10 | 2 | 40 | 193 | 69 | Inventive Example 54 |
| 99 | 20 | 10 | 3 | 40 | 194 | 75 | Inventive Example 55 |
| 100 | 20 | 10 | 4 | 40 | 196 | 78 | Inventive Example 56 |
| 101 | 20 | 10 | 4.5 | 40 | 206 | 78 | Comparative Example 14 |

In each of Comparative Example 5, Comparative Example 11, and Comparative Example 13, since the average hole diameter D is excessively small and the holes 8 are clogged with the catalyst, the emission control performance is hardly improved even by providing the burrs. In each of Comparative Examples 12 and 14, since the average hole diameter D is excessively large and the total length of the burrs becomes short, the emission control performance cannot be improved.

Comparatively referring to each of Inventive Examples 49 to 52, it is found that the desired emission control performance can be ensured by providing the burrs even when the average hole diameter D is small. Similarly, comparatively referring to each of Inventive Examples 53 to 56, it is found that the desired emission control performance can be ensured by providing the burrs even when the average hole diameter D is small.

(Embodiment example 6)

Embodiment example 6 corresponds to the second embodiment. In the present Embodiment example, the emission control performance and the pressure loss performance were evaluated when the aperture ratio R was variously changed. Table 6 shows the results. Comparative Examples in Table 6 are the same as those in Table 3. The composition and the size of the metal foil were the same as those in Embodiment example 3. Note that the average height of the burrs L was changed by adjusting the punching speed of the punching press without performing the height adjustment by the shape adjustment device.

[Table 6]

| No. | Catalyst layer thickness μm | Average height of burrs μm | Hole diameter mm | Aperture ratio % | T80 °C | Pressure loss Pa | Note |
|---|---|---|---|---|---|---|---|
| 102 | 20 | 0.05 | 2.5 | 3 | 222 | 80 | Comparative Example 15 |
| 103 | 20 | 0.05 | 2.5 | 5 | 221.8 | 83 | Comparative Example 16 |
| 104 | 20 | 0.05 | 2.5 | 10 | 221.5 | 85 | Comparative Example 17 |
| 105 | 20 | 0.05 | 2.5 | 15 | 221 | 87 | Comparative Example 18 |
| 106 | 20 | 0.05 | 2.5 | 20 | 220.2 | 90 | Comparative Example 19 |

(continued)

| No. | Catalyst layer thickness $\mu$m | Average height of burrs $\mu$m | Hole diameter mm | Aperture ratio % | T80 °C | Pressure loss Pa | Note |
|---|---|---|---|---|---|---|---|
| 107 | 20 | 0.05 | 2.5 | 25 | 219.4 | 92 | Comparative Example 20 |
| 108 | 20 | 0.05 | 2.5 | 35 | 218 | 95 | Comparative Example 21 |
| 109 | 20 | 0.05 | 2.5 | 45 | 216.8 | 98 | Comparative Example 22 |
| 110 | 20 | 0.05 | 2.5 | 55 | 215.3 | 101 | Comparative Example 23 |
| 111 | 20 | 0.05 | 2.5 | 60 | 214.7 | 104 | Comparative Example 24 |
| 112 | 20 | 0.05 | 2.5 | 65 | 214 | 106 | Comparative Example 25 |
| 113 | 20 | 0.05 | 2.5 | 70 | 213.2 | 108 | Comparative Example 26 |
| 114 | 20 | 0.05 | 2.5 | 73 | 212.5 | 110 | Comparative Example 27 |
| 115 | 20 | 1.5 | 2.5 | 3 | 222 | 80 | Comparative Example 28 |
| 116 | 20 | 1.5 | 2.5 | 5 | 221.5 | 83 | Inventive Example 57 |
| 117 | 20 | 1.5 | 2.5 | 10 | 221.1 | 85 | Inventive Example 58 |
| 118 | 20 | 1.5 | 2.5 | 15 | 220 | 87 | Inventive Example 59 |
| 119 | 20 | 1.5 | 2.5 | 20 | 218.5 | 90 | Inventive Example 60 |
| 120 | 20 | 1.5 | 2.5 | 25 | 217.6 | 92 | Inventive Example 61 |
| 121 | 20 | 1.5 | 2.5 | 35 | 215.4 | 95 | Inventive Example 62 |
| 122 | 20 | 1.5 | 2.5 | 45 | 214 | 98 | Inventive Example 63 |
| 123 | 20 | 1.5 | 2.5 | 55 | 212.7 | 101 | Inventive Example 64 |
| 124 | 20 | 1.5 | 2.5 | 60 | 212.3 | 104 | Inventive Example 65 |
| 125 | 20 | 1.5 | 2.5 | 65 | 211.7 | 106 | Inventive Example 66 |
| 126 | 20 | 1.5 | 2.5 | 70 | 211.3 | 108 | Inventive Example 67 |
| 127 | 20 | 1.5 | 2.5 | 73 | 211 | 110 | Comparative Example 29 |
| 128 | 20 | 8.0 | 2.5 | 3 | 222 | 80 | Comparative Example 30 |
| 129 | 20 | 8.0 | 2.5 | 5 | 221.2 | 83 | Inventive Example 68 |
| 130 | 20 | 8.0 | 2.5 | 10 | 220.2 | 85 | Inventive Example 69 |
| 131 | 20 | 8.0 | 2.5 | 15 | 219 | 87 | Inventive Example 70 |
| 132 | 20 | 8.0 | 2.5 | 20 | 217.2 | 90 | Inventive Example 71 |
| 133 | 20 | 8.0 | 2.5 | 25 | 216 | 92 | Inventive Example 72 |
| 134 | 20 | 8.0 | 2.5 | 35 | 213.5 | 95 | Inventive Example 73 |
| 135 | 20 | 8.0 | 2.5 | 45 | 212.1 | 98 | Inventive Example 74 |
| 136 | 20 | 8.0 | 2.5 | 55 | 211.2 | 101 | Inventive Example 75 |
| 137 | 20 | 8.0 | 2.5 | 60 | 210.8 | 104 | Inventive Example 76 |
| 138 | 20 | 8.0 | 2.5 | 65 | 210.6 | 106 | Inventive Example 77 |
| 139 | 20 | 8.0 | 2.5 | 70 | 210.3 | 108 | Inventive Example 78 |
| 140 | 20 | 8.0 | 2.5 | 73 | 210.1 | 110 | Comparative Example 31 |

It is presumed that by increasing the aperture ratio, the total length of the burrs becomes increased and thereby the emission control performance is improved.

Reference Signs List

1    catalytic converter
2    flat foil
3    corrugated foil
4    honeycomb body

## Claims

1. A honeycomb-type metal substrate formed by alternately layering a metal flat foil and a metal corrugated foil,

    a plurality of holes being formed in the metal flat foil and the metal corrugated foil,
    a burr having a small height being formed on an edge of each hole,
    the following expressions (1) to (3) being satisfied when an average hole diameter of the plurality of holes is defined as D, an aperture ratio of the holes is defined as R, and an average height of the burrs is defined as L,

$$1.1 \text{ mm} \leq D \leq 4.0 \text{ mm} \qquad (1)$$

$$5\% \leq R \leq 70\% \qquad (2)$$

$$0.1 \text{ } \mu\text{m} \leq L \leq 30 \text{ } \mu\text{m} \qquad (3),$$

    wherein:

        for holes that are not circular, the hole diameter of each hole can be found by converting the area into a circle; and
        when a triangle is drawn by connecting the centers of three adjacent holes with lines and an area inside the triangle is defined as an entire area, and areas of parts where the triangle overlaps with the holes are defined as hole areas, a ratio of the hole areas to the entire area is defined as the aperture ratio R.

2. The honeycomb-type metal substrate according to claim 1, wherein
   a tip end surface of each burr is formed in a shape extending in a direction orthogonal to a projecting direction of the burr.

3. The honeycomb-type metal substrate according to claim 2, wherein
   the burrs have narrow portions each having a width smaller than the tip end surface.

4. The honeycomb-type metal substrate according to any one of claims 1 to 3, wherein
   the average height of the burrs L satisfies the following expression (4),

$$0.5 \text{ } \mu\text{m} \leq L \leq 20 \text{ } \mu\text{m} \qquad (4).$$

5. The honeycomb-type metal substrate according to any one of claims 1 to 4, wherein
   a standard deviation $\sigma$ of hole diameters of the plurality of holes is 0.001 mm or more and 0.5 mm or less.

6. A catalytic converter comprising:

        the honeycomb-type metal substrate according to any one of claims 1 to 3; and
        a catalyst layer carried on the metal flat foil and the metal corrugated foil,
        the average height of the burrs L being smaller than a thickness of the catalyst layer or larger than the thickness of the catalyst layer by a predetermined amount, and
        the predetermined amount being 10 $\mu$m or less.

7. A catalytic converter according to claim 6, wherein:

the average height of the burrs L satisfies the following expression (4),

$$0.5 \ \mu m \ \leq \ L \ \leq \ 20 \ \mu m \qquad (4),$$

and
the average height of the burrs L being smaller than a thickness of the catalyst layer.

8. A method for manufacturing a honeycomb-type metal substrate formed by alternately layering a metal flat foil and a metal corrugated foil,
the method comprising:

a hole-forming step of forming a plurality of holes in each of the metal flat foil and a base-material metal flat foil as a base material of the metal corrugated foil;
a height adjusting step of adjusting a burr height by crushing a burr formed at an edge of each hole in the hole-forming step;
a pressing step of pressing the base-material metal flat foil to form the metal corrugated foil; and
a layering step of layering the metal flat foil and the metal corrugated foil,
the hole forming step being performed so as to satisfy the following expressions (1) and (2) when an average hole diameter of the plurality of holes is defined as D, and an aperture ratio of the holes is defined as R, the height adjusting step being performed so as to satisfy the following expression (3) when an average height of the burrs is defined as L,

$$1.1 \ mm \ \leq \ D \ \leq \ 4.0 \ mm \qquad (1)$$

$$5\% \ \leq \ R \ \leq \ 70\% \qquad (2)$$

$$0.1 \ \mu m \ \leq \ L \ \leq \ 30 \ \mu m \qquad (3),$$

wherein:

for holes that are not circular, the hole diameter of each hole can be found by converting the area into a circle; and
when a triangle is drawn by connecting the centers of three adjacent holes with lines and an area inside the triangle is defined as an entire area, and areas of parts where the triangle overlaps with the holes are defined as hole areas, a ratio of the hole areas to the entire area is defined as the aperture ratio R.

9. The method for manufacturing the honeycomb-type metal substrate according to claim 8, wherein
the height adjusting step is performed such that the average height of the burrs L satisfies the following expression (4),

$$0.5 \ \mu m \ \leq \ L \ \leq \ 20 \ \mu m \qquad (4).$$

10. The method for manufacturing the honeycomb-type metal substrate according to claim 8 or 9, wherein
the hole forming step is performed such that that a standard deviation $\sigma$ of hole diameters of the plurality of holes satisfies 0.001 mm or more and 0.5 mm or less.

## Patentansprüche

1. Wabenartiges Metallsubstrat, das durch abwechselndes Schichten einer flachen Metallfolie und einer gewellten Metallfolie gebildet wird,

wobei eine Vielzahl von Löchern in der flachen Metallfolie und der gewellten Metallfolie gebildet ist,
ein Grat mit geringer Höhe an einer Kante jedes Lochs gebildet ist,
die folgenden Ausdrücke (1) bis (3) erfüllt sind, wenn ein durchschnittlicher Lochdurchmesser der Vielzahl von Löchern als D definiert ist, ein Öffnungsverhältnis der Löcher als R definiert ist und eine durchschnittliche Höhe der Grate als L definiert ist,

$$1{,}1 \text{ mm} \leq D \leq 4{,}0 \text{ mm} \qquad (1)$$

$$5 \% \leq R \leq 70 \% \qquad (2)$$

$$0{,}1 \ \mu\text{m} \leq L \leq 30 \ \mu\text{m} \qquad (3),$$

wobei:

für Löcher, die nicht kreisförmig sind, der Lochdurchmesser jedes Lochs durch Umwandlung der Fläche in einen Kreis ermittelt werden kann; und

wenn ein Dreieck gezeichnet wird, indem die Mittelpunkte von drei benachbarten Löchern mit Linien verbunden werden, und eine Fläche innerhalb des Dreiecks als Gesamtfläche definiert ist, und Flächen von Teilen, wo das Dreieck mit den Löchern überlappt, als Lochflächen definiert sind, das Verhältnis der Lochflächen zur Gesamtfläche als Öffnungsverhältnis R definiert ist.

2. Wabenartiges Metallsubstrat nach Anspruch 1, wobei
eine Spitzenendfläche jedes Grates in einer Form gebildet ist, die sich in einer Richtung orthogonal zur Vorsprungsrichtung des Grates erstreckt.

3. Wabenartiges Metallsubstrat nach Anspruch 2, wobei
die Grate schmale Abschnitte aufweisen, die jeweils eine Breite aufweisen, die kleiner als die Spitzenendfläche ist.

4. Wabenartiges Metallsubstrat nach einem der Ansprüche 1 bis 3, wobei
die durchschnittliche Höhe der Grate L den folgenden Ausdruck (4) erfüllt:

$$0{,}5 \ \mu\text{m} \leq L \leq 20 \ \mu\text{m} \quad (4).$$

5. Wabenartiges Metallsubstrat nach einem der Ansprüche 1 bis 4, wobei
die Standardabweichung $\sigma$ der Lochdurchmesser der Vielzahl von Löchern 0,001 mm oder mehr und 0,5 mm oder weniger beträgt.

6. Katalytischer Umwandler, umfassend:

das wabenartige Metallsubstrat nach einem der Ansprüche 1 bis 3; und
eine Katalysatorschicht, die auf der flachen Metallfolie und der gewellten Metallfolie getragen wird,
wobei die durchschnittliche Höhe der Grate L kleiner als die Dicke der Katalysatorschicht oder um einen vorbestimmten Betrag größer als die Dicke der Katalysatorschicht ist, und
der vorbestimmte Betrag 10 $\mu$m oder weniger beträgt.

7. Katalysator nach Anspruch 6, wobei:

die durchschnittliche Höhe der Grate L den folgenden Ausdruck (4) erfüllt:

$$0{,}5 \ \mu\text{m} \leq L \leq 20 \ \mu\text{m} \quad (4),$$

und
die durchschnittliche Höhe der Grate L kleiner ist als die Dicke der Katalysatorschicht.

8. Verfahren zur Herstellung eines wabenartigen Metallsubstrats, das durch abwechselndes Schichten einer flachen Metallfolie und einer gewellten Metallfolie gebildet wird,
wobei das Verfahren Folgendes umfasst:

einen Lochbildungsschritt zum Bilden einer Vielzahl von Löchern in jeder der flachen Metallfolie und einer flachen Metallfolie aus einem Basismaterial als Basismaterial der gewellten Metallfolie;
einen Höhenanpassungsschritt zum Anpassen einer Grathöhe durch Zerdrücken eines Grats, der an einer Kante jedes Lochs im Lochbildungsschritt gebildet wird;

einen Pressschritt zum Pressen der flachen Metallfolie aus dem Basismaterial, um die gewellte Metallfolie zu bilden; und

einen Schichtungsschritt zum Schichten der flachen Metallfolie und der gewellten Metallfolie,

wobei der Lochbildungsschritt so durchgeführt wird, dass die folgenden Ausdrücke (1) und (2) erfüllt sind, wenn ein durchschnittlicher Lochdurchmesser der Vielzahl von Löchern als D definiert ist und ein Öffnungsverhältnis der Löcher als R definiert ist, wobei der Höhenanpassungsschritt so durchgeführt wird, dass der folgende Ausdruck (3) erfüllt ist, wenn eine durchschnittliche Höhe der Grate als L definiert ist:

$$1{,}1 \text{ mm} \leq D \leq 4{,}0 \text{ mm} \qquad (1)$$

$$5 \text{ \%} \leq R \leq 70 \text{ \%} \qquad (2)$$

$$0{,}1 \text{ µm} \leq L \leq 30 \text{ µm} \qquad (3),$$

wobei

für Löcher, die nicht kreisförmig sind, der Lochdurchmesser jedes Lochs durch Umwandlung der Fläche in einen Kreis ermittelt werden kann; und

wenn ein Dreieck gezeichnet wird, indem die Mittelpunkte von drei benachbarten Löchern mit Linien verbunden werden, und eine Fläche innerhalb des Dreiecks als Gesamtfläche definiert ist, und Flächen von Teilen, wo das Dreieck mit den Löchern überlappt, als Lochflächen definiert sind, das Verhältnis der Lochflächen zur Gesamtfläche als Öffnungsverhältnis R definiert ist.

9. Verfahren zur Herstellung des wabenartigen Metallsubstrats nach Anspruch 8, wobei

Der Höhenanpassungsschritt so durchgeführt wird, dass die durchschnittliche Höhe der Grate L den folgenden Ausdruck (4) erfüllt:

$$0{,}5 \text{ µm} \leq L \leq 20 \text{ µm} \qquad (4).$$

10. Verfahren zur Herstellung des wabenartigen Metallsubstrats nach Anspruch 8 oder 9, wobei

der Lochbildungsschritt so durchgeführt wird, dass eine Standardabweichung σ der Lochdurchmesser der Vielzahl von Löchern 0,001 mm oder mehr und 0,5 mm oder weniger erfüllt.

**Revendications**

1. Substrat de métal de type en nid d'abeille formé par la disposition en couche alternée d'une feuille plate de métal et d'une feuille ondulée de métal,

une pluralité de trous étant formés dans la feuille plate de métal et la feuille ondulée de métal,

une bavure de faible hauteur étant formée sur un bord de chaque trou,

les expressions (1) à (3) suivantes étant satisfaites lorsqu'un diamètre moyen de trou de la pluralité de trous est défini comme D, le rapport d'ouverture des trous étant défini comme R, et une hauteur moyenne des bavures étant définie comme L,

$$1{,}1 \text{ mm} \leq D \leq 4{,}0 \text{ mm} \qquad (1)$$

$$5 \text{ \%} \leq R \leq 70 \text{ \%} \qquad (2)$$

$$0{,}1 \text{ µm} \leq L \leq 30 \text{ µm} \qquad (3),$$

où :

pour des trous qui ne sont pas circulaires, le diamètre de trou de chaque trou peut être trouvé par conversion de l'aire en un cercle ; et

lorsque l'on trace un triangle en reliant les centres de trois trous adjacents par des lignes et l'on définit une aire à l'intérieur du triangle comme aire totale, et si l'on définit des aires de trou de parties où le triangle chevauche les trous comme aires de trou, un rapport entre les aires de trou et l'aire totale est défini comme le rapport d'ouverture R.

2. Substrat de métal de type en nid d'abeille selon la revendication 1, dans lequel
une surface d'extrémité de pointe de chaque bavure est formée selon une forme s'étendant dans une direction orthogonale à une direction de saillie de la bavure.

3. Substrat de métal de type en nid d'abeille selon la revendication 2, dans lequel
les bavures ont des portions étroites ayant chacune une largeur plus petite que la surface d'extrémité de pointe.

4. Substrat de métal de type en nid d'abeille selon l'une quelconque des revendications 1 à 3, dans lequel
la hauteur moyenne des bavures L satisfait l'expression (4) suivante,

$$0{,}5 \ \mu m \le L \le 20 \ \mu m \qquad (4).$$

5. Substrat de métal de type en nid d'abeille selon l'une quelconque des revendications 1 à 4, dans lequel
un écart type $\sigma$ de diamètres de trous de la pluralité de trous est supérieur ou égal à 0,001 mm et inférieur ou égal à 0,5 mm.

6. Convertisseur catalytique comprenant :

le substrat de métal de type en nid d'abeille selon l'une quelconque des revendications 1 à 3 ; et
une couche de catalyseur portée par la feuille plate de métal et la feuille ondulée de métal,
la hauteur moyenne des bavures L étant inférieure à une épaisseur de la couche de catalyseur ou supérieure à l'épaisseur de la couche de catalyseur d'une quantité prédéterminée, et
la quantité prédéterminée étant inférieure ou égale à 10 $\mu$m.

7. Convertisseur catalytique selon la revendication 6, dans lequel :

la hauteur moyenne des bavures L satisfait l'expression (4) suivante,

$$0{,}5 \ \mu m \le L \le 20 \ \mu m \qquad (4),$$

et
la hauteur moyenne des bavures L étant inférieure à une épaisseur de la couche de catalyseur.

8. Procédé de fabrication d'un substrat de métal de type en nid d'abeille formé par la disposition en couche alternée d'une feuille plate de métal et d'une feuille ondulée de métal,
le procédé comprenant :

une étape de formation de trous consistant à former une pluralité de trous dans chacune de la feuille plate de métal et d'une feuille plate de métal de matériau de base servant de matériau de base à la feuille ondulée de métal ;
une étape d'ajustement de hauteur consistant à ajuster la hauteur de bavure en écrasant une bavure formée au niveau du bord de chaque trou lors de l'étape de formation de trous ;
une étape de pressage consistant à presser la feuille plate de métal de matériau de base pour former la feuille ondulée de métal ; et
une étape de disposition en couche consistant à disposer en couche la feuille plate de métal et la feuille ondulée de métal,
l'étape de formation de trous étant réalisée de manière à satisfaire les expressions (1) et (2) suivantes lorsqu'un diamètre moyen de trou de la pluralité de trous est défini comme D, et un rapport d'ouverture des trous est défini comme R, l'étape d'ajustement de hauteur étant réalisée de manière à satisfaire l'expression (3) suivante lorsqu'une hauteur moyenne des bavures est définie comme L,

$$1{,}1 \text{ mm} \leq D \leq 4{,}0 \text{ mm} \qquad (1)$$

$$5 \text{ \%} \leq R \leq 70 \text{ \%} \qquad (2)$$

$$0{,}1 \text{ } \mu\text{m} \leq L \leq 30 \text{ } \mu\text{m} \qquad (3),$$

où :

pour des trous qui ne sont pas circulaires, le diamètre de trou de chaque trou peut être trouvé par conversion de l'aire en un cercle ; et

lorsque l'on trace un triangle en reliant les centres de trois trous adjacents par des lignes et l'on définit une aire à l'intérieur du triangle comme aire totale, et si l'on définit des aires de trou de parties où le triangle chevauche les trous comme aires de trou, un rapport entre les aires de trou et l'aire totale est défini comme le rapport d'ouverture R.

9. Procédé de fabrication du substrat de métal de type en nid d'abeille selon la revendication 8, dans lequel l'étape d'ajustement de hauteur est réalisée de sorte que la hauteur moyenne des bavures L satisfait l'expression (4) suivante,

$$0{,}5 \text{ } \mu\text{m} \leq L \leq 20 \text{ } \mu\text{m} \qquad (4).$$

10. Procédé de fabrication du substrat de métal de type en nid d'abeille selon la revendication 8 ou 9, dans lequel l'étape de formation de trous est réalisée de sorte qu'un écart type $\sigma$ des diamètres de trou de la pluralité de trous est supérieur ou égal à 0,001 mm et inférieur ou égal à 0,5 mm.

FIG.1

AXIAL DIRECTION

FIG.2

NARROW
PORTION 8

3A

8

20

2 2A

20

3

2A 20 2

FIG.3

BURR BEFORE
SHAPE ADJUSTMENT

## FIG.4

BURR

PROJECTING DIRECTION
OF BURR
(THICKNESS DIRECTION
OF METAL FOIL)

FIG.5

TIP END SURFACE OF BURR

EDGE OF BURR

CENTER OF HOLE 8

8

FIG.6

FIG.7

FIG.8

FIG.9

FIG.10

**EP 4 268 955 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010298130 A1
- JP 4975969 B
- JP 5199291 B
- JP 2005313083 A
- JP 2015157272 A
- JP 2017148705 A